# FASCICULE DE BREVET EUROPEEN

(11) **EP 2 596 329 B1**
(45) Date de publication et mention de la délivrance du brevet: **06.03.2019**
(21) Numéro de dépôt: 11746641.7
(22) Date de dépôt: 19.07.2011
(51) Int. Cl.: G01N 15/14, G01N 21/53, G01N 15/00, G01N 21/47

(54) **DETECTEUR DE PARTICULES ET PROCEDE DE REALISATION D'UN TEL DETECTEUR**
PARTIKELDETEKTOR UND VERFAHREN ZUR HERSTELLUNG EINES DERARTIGEN DETEKTORS
PARTICLE DETECTOR AND METHOD FOR MANUFACTURING SUCH A DETECTOR

(30) Priorité: 22.07.2010 FR 1003081
(43) Date de publication de la demande: 29.05.2013
(73) Titulaire: Commissariat à l'Énergie Atomique et aux Énergies Alternatives, 75015 Paris (FR)
(72) Inventeur: NICOLETTI, Sergio, F-38650 Sinard (FR)
(74) Mandataire: Gevers & Orès
(86) Numéro de dépôt international: PCT/IB2011/053213
(87) Numéro de publication internationale: WO 2012/011052

(56) Documents cités:
- WO-A1-97/12223
- DE-A1- 4 230 087

## Description

L'invention concerne le domaine de la détection de particules, notamment de particules présentes dans l'atmosphère.

La taille de celles-ci peut varier entre quelques nanomètres, pour les gouttelettes présentes dans les nuages, et quelques dizaines de microns, pour les particules de poussières générées par les activités humaines ou par des effets naturels.

Les effets de ces particules sur la santé humaine deviennent une préoccupation croissante.

Ceux-ci dépendent essentiellement de la capacité de ces particules à être absorbées par les voies respiratoires.

Les particules dont la taille est importante restent emprisonnées dans la cavité naso-pharyngéale, alors que les particules de plus petite taille sont capables de pénétrer dans la section alvéolaire des poumons.

De même, la fraction de particules exhalées augmente graduellement avec la dimension de ces particules.

En conséquence, les particules dont la taille est la plus faible sont considérées comme les plus dangereuses pour la santé humaine.

C'est pourquoi le suivi du taux d'exposition humaine aux particules est un important élément d'évaluation des risques sanitaires sur le lieu de travail et dans l'environnement extérieur.

Ce suivi nécessite de mesurer simultanément la concentration et la taille des particules présentes dans l'air ambiant pour au moins une taille donnée de particules.

Ainsi, les normes nationales et européennes actuellement en vigueur exigent la surveillance du paramètre PM10, c'est-à-dire le nombre de particules par unité de volume présentes dans l'atmosphère et ayant une dimension supérieure à 10 µm. On peut également envisager d'autres paramètres, tels que PM2,5 ou PM1, c'est-à-dire le nombre de particules par unité de volume ayant une dimension supérieure à 2,5 µm ou 1 µm.

Dans l'état de l'art, sont connues trois techniques utilisées pour la mesure de la concentration de particules dans l'atmosphère : la mesure gravimétrique, la technique β et la technique optique d'absorption et de diffraction.

La mesure gravimétrique consiste à filtrer l'air ambiant à l'aide d'un filtre gravimétrique à porosité contrôlée. Ce filtre rassemble toutes les particules au-dessous d'une taille donnée, dite taille de coupure.

Il est généralement associé à un deuxième filtre à admission sélective qui enlève les particules de grande taille et à une pompe qui assure un flux d'air constant dans l'ensemble du système.

Pour déterminer la quantité de particules, le filtre est ensuite pesé.

Ainsi, pour obtenir des informations sur la taille des particules, il convient d'utiliser plusieurs filtres différents.

Cette technique nécessite l'utilisation de nombreux consommables et la réalisation d'un nombre important de manipulations. C'est pourquoi elle est relativement longue et chère à mettre en oeuvre.

Enfin, cette technique ne permet de délivrer qu'une mesure moyenne et ne peut donner aucune information sur la distribution temporelle des particules.

La technique β met en oeuvre une source de carbone 14 à basse énergie qui fournit un flux constant d'électrons β, lesquels sont détectés par un tube Geiger ou par une matrice de photodiodes.

Un filtre à bande est interposé entre la source et le détecteur.

Le cycle de mesure des particules commence par un calibrage.

Un échantillon de gaz est ensuite envoyé au travers du filtre à bande, sur lequel sont rassemblées toutes les particules dont la taille est supérieure à une taille donnée, par exemple 10 µm.

Le filtre est ensuite de nouveau interposé entre la source et le détecteur et la transmission d'électrons β est mesurée.

La différence de transmission d'électrons β à travers le filtre est directement proportionnelle à la masse de particules accumulée sur le filtre.

Comme la technique gravimétrique, cette technique β met en oeuvre une quantité de consommables assez importante. Par ailleurs, elle ne permet de donner qu'une mesure moyenne et elle ne donne donc aucune information sur la distribution temporelle des particules.

On peut noter également que l'information sur la taille des particules nécessite l'utilisation de plusieurs filtres.

Enfin, la technique β nécessite la présence d'une source radiative et d'un système capable de gérer des manipulations complexes.

La technique optique d'absorption et de diffraction est basée sur la mesure de la quantité de lumière diffractée par les particules présentes dans le volume utile d'un détecteur.

On peut ainsi citer un détecteur photométrique qui mesure la quantité de lumière diffusée par l'interaction avec les particules.

Un tel détecteur permet de couvrir une gamme de concentration de particules assez large.

Cependant, le signal qu'il fournit est proportionnel à la taille, à la forme et aux propriétés optiques des particules et ne peut pas donner une estimation de la taille moyenne des particules.

Par ailleurs, l'estimation de la concentration dépend d'une différence entre la quantité de lumière absorbée et celle qui est transmise. De ce fait, la différence devient très faible lorsque la concentration des particules baisse et il n'est alors plus possible de réaliser une estimation correcte.

Le document DE-4230087 décrit un autre type de détecteur de particules qui comporte un substrat, avec une gorge gravée et un guide d'onde intégré et également une source de lumière et un récepteur de lumière, indépendants du substrat. Le guide d'onde est interrompu par la gorge gravée qui permet le passage du milieu à analyser. Par ailleurs, une membrane pourvue de trous est prévue pour déterminer la taille minimale des particules à mesurer et pour filtrer le milieu s'écoulant.

Ainsi, avec ce détecteur, les particules sont préfiltrées et ensuite, leur passage entre les deux parties du guide d'onde entraîne une dissipation de la lumière. La différence de flux de lumière transitant dans les deux parties est détectée et reliée au nombre de particules passant dans la gorge.

Un tel détecteur est relativement complexe puisqu'il nécessite un préfiltrage. Par ailleurs, l'utilisation de composants discrets pose classiquement des problèmes de réglage.

On peut également citer le compteur optique de particules qui met en oeuvre une source laser focalisée à proximité d'un jet d'air contenant les particules à détecter. La lumière diffractée, diffusée ou réfléchie par les particules, est collectée par une photodiode, décentrée par rapport à l'axe optique.

Un tel compteur optique de particules est notamment décrit dans l'article « A novel optical instrument for estimating size segregated aerosol mass concentration in real time » de X. Wang et al (Aerosol science and technology, 1er septembre 2009.

Un compteur optique de particules présente l'intérêt de fournir en temps réel, le nombre de particules et une estimation de leur taille, grâce à la mesure de l'intensité de la lumière collectée.

Cependant, la qualité des mesures est liée à un positionnement précis du faisceau laser et du jet d'air.

Un inconvénient majeur d'un tel compteur optique est le risque de sous-estimation de la concentration de particules. Elle peut être due à la présence simultanée de plusieurs particules dans le volume de détection, ces particules étant partiellement ou complètement superposées vis-à-vis du faisceau laser.

Par ailleurs, un compteur optique est classiquement constitué de composants discrets, ce qui pose des problèmes d'encombrement, d'alignement et de réglage.

Ainsi, le document WO97/12 223 décrit un cytomètre en flux comprenant deux composants : une tête optique et un module de flux jetable. La tête optique comporte un laser et deux photodétecteurs. Le module de flux consiste en un substrat gravé d'un canal pour le passage d'un flux.

Ce document indique que les éléments optiques peuvent être montés dans un logement rigide pour conserver leur alignement. Cependant, il s'agit de composants discrets qui sont, de surcroît, indépendants du module puisqu'il s'agit d'un élément jetable.

Dans tous les cas, les dispositifs constitués d'éléments discrets entraînent également des coûts de fabrication importants.

L'invention a pour objet de pallier les inconvénients des techniques connues en proposant un dispositif de détection de particules qui présente les avantages des compteurs optiques de particules, c'est-à-dire la possibilité de mesurer en temps réel à la fois la concentration et la taille des particules, mais qui soient compacts, dont les dimensions soient parfaitement contrôlées, avec un coût de fabrication réduit et qui présentent une robustesse supérieure à celle d'un simple montage mécanique.

Par ailleurs, le procédé utilisé pour obtenir ce dispositif permet de réaliser simultanément et sans coût additionnel, une pluralité de composants, ce qui permet de réduire les risques de sous-estimation du nombre de particules.

Enfin, ce dispositif peut fonctionner dans une gamme importante de longueurs d'ondes, ce qui permet d'une part, de détecter des particules dont la taille est bien inférieure au micron et d'autre part, d'acquérir des informations concernant la nature chimique des particules.

Ainsi, l'invention concerne un détecteur de particules du type compteur optique, comprenant un substrat, dans lequel est formée au moins une cavité traversante, délimitée par une section d'entrée et une section de sortie, sa section d'entrée étant destinée à être reliée à une source de flux d'air, ledit flux d'air comportant les particules à détecter, ledit substrat supportant :
- des moyens optiques comprenant au moins une source laser et au moins un guide d'onde, relié à ladite au moins une source laser et débouchant à proximité de la section de sortie de ladite cavité, pour assurer l'émission d'un faisceau lumineux et
- des moyens photodétecteurs situés à proximité de la section de sortie de ladite cavité et décalés par rapport à l'axe optique, pour détecter la lumière diffusée.

De façon préférée, les moyens optiques et les moyens photodétecteurs sont situés sur une même face du substrat.

De façon avantageuse, ladite au moins une cavité présente une section variable qui diminue depuis la section d'entrée jusqu'à la section de sortie.

De façon avantageuse, les moyens optiques comprennent également au moins un dispositif photonique, à l'extrémité du guide d'onde opposée à la source laser, pour focaliser la lumière dans ladite au moins une cavité.

Par ailleurs, la source laser et le guide d'onde peuvent être reliés au moyen d'un coupleur ou par couplage évanescent.

Dans un premier mode de réalisation, le détecteur comprend une pluralité de photodétecteurs associés à une cavité traversante.

Dans un autre mode de réalisation, le substrat comporte une pluralité de cavités traversantes.

L'invention concerne également un procédé de réalisation d'un détecteur de particules selon l'invention, comprenant les étapes suivantes :
(a) le dépôt, sur un substrat, d'une première couche d'un matériau d'un premier indice optique n₁,
(b) le dépôt, sur cette première couche, d'une deuxième couche d'un matériau d'un deuxième indice optique n₂, n₂ étant supérieur à n₁,
(c) la réalisation d'au moins un guide d'onde par structuration de la deuxième couche, puis par dépôt et structuration d'une troisième couche d'un matériau d'un troisième indice optique n₃, n₃ étant inférieur à n₂,
(d) la réalisation d'au moins un photodétecteur,
(e) la réalisation d'au moins une source laser à une extrémité dudit au moins un guide d'onde,
(f) la réalisation des interconnexions électriques entre les différents éléments réalisés sur le substrat et
(g) la réalisation par gravure dans le substrat d'au moins une cavité traversante débouchant à proximité de l'extrémité dudit au moins un guide d'onde opposée à la source laser et à proximité dudit au moins un photodétecteur, ce dernier étant décalé par rapport à l'axe optique.

De façon préférée, les étapes (a) à (f) sont réalisées sur une même face du substrat.

De façon avantageuse, le substrat est en un matériau semi-conducteur, notamment du silicium.

Par ailleurs, l'épaisseur des première et deuxième couches déposées sur le substrat correspond sensiblement à la longueur d'ondes de la source laser.

De façon préférée, la structuration de la deuxième couche et de la troisième couche prévue à l'étape (c) comporte une étape de lithographie et une étape de gravure.

Au cours de l'étape (d), le photodétecteur réalisé est une photodiode obtenue par la réalisation d'une jonction pn sur le substrat.

Par ailleurs, l'étape (e) est avantageusement mise en oeuvre par hybridation ou par intégration hétérogène.

Enfin, le procédé selon l'invention peut comporter, après l'étape (c), une étape complémentaire consistant à nanostructurer l'extrémité du guide d'onde, opposée à la source laser, pour réaliser une fonction de focalisation.

L'invention sera mieux comprise et d'autres buts, avantages et caractéristiques de celle-ci apparaîtront plus clairement à la lecture de la description qui suit et qui est faite au regard des dessins annexés sur lesquels :
- la figure 1 est une vue en perspective d'un premier exemple de réalisation d'un détecteur de particules selon l'invention,
- la figure 2 est une vue de dessus d'un deuxième exemple de réalisation d'un détecteur de particules selon l'invention,
- la figure 3 est une vue de dessus d'un troisième exemple de réalisation d'un détecteur de particules selon l'invention et
- les figures 4a à 4f représentent des étapes d'un procédé de réalisation du détecteur de particules illustré à la figure 1.

Les éléments communs aux différentes figures seront désignés par les mêmes références.

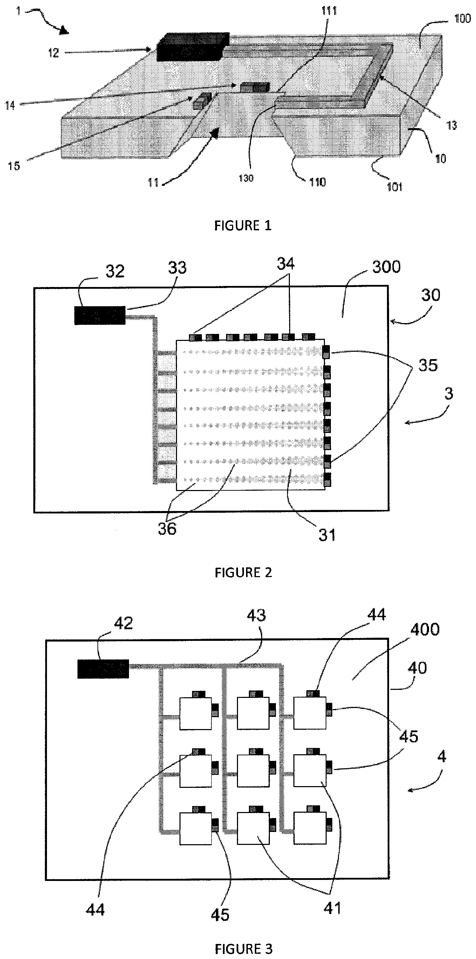

Le détecteur de particules 1, illustré à la figure 1, comporte un substrat 10, notamment en silicium.

De façon générale, ce substrat doit être compatible avec les techniques classiques de micro et nanofabrication de composants miniaturisés. Il peut ainsi être réalisé en un matériau semi-conducteur, comme Si ou GaAs, ou encore en verre ou en saphir.

Par ailleurs, de préférence, il est réalisé en un matériau rigide.

Dans ce substrat 10, est ménagée une cavité traversante 11. Cette cavité 11 est destinée à recevoir et diriger un flux d'air, depuis la section d'entrée 110 jusqu'à la section de sortie 111.

De préférence, la section de la cavité 11 diminue entre la section d'entrée 110 et la section d'entrée 111, de façon à mieux guider le flux d'air.

Cette cavité 11 peut être obtenue par gravure et notamment par gravure anisotrope.

En fonctionnement, la section d'entrée 110 est reliée à un flux d'air comportant les particules à détecter.

Le substrat 10 présente une forme sensiblement plane ou au moins une surface plane telle que la face 100. Il comporte également, sur sa face 100 sur laquelle est définie la section de sortie 111 de la cavité, une source laser 12.

Cette source laser est directement intégrée sur le substrat 10, par exemple selon un procédé de co-intégration par hybridation ou d'intégration hétérogène.

On peut ainsi citer l'article « Heterogenous integration of electrically driven microdisk based laser sources for optical interconnects and photonic ICs » de P. Rojo Romeo et al (Optics Express 3864 - 1 May 2006/vol. 14, N°9).

Le dispositif 1 comporte également, sur la face 100, un guide d'onde 13 qui relie la source laser 12 à la cavité 11. La source laser 12 et le guide d'onde 13 constituent les moyens optiques du détecteur de particules 1.

En fonctionnement, la radiation lumineuse générée par la source laser 12 est injectée dans le guide d'onde 13 à l'aide d'un coupleur ou par couplage évanescent.

Elle est émise par le guide d'onde dans une direction donnée, dénommée l'axe optique des moyens optiques.

Ainsi, la radiation lumineuse générée par la source laser 12 est dirigée vers la section de sortie 111 de la cavité, cette dernière constituant l'espace d'interaction entre les particules et la radiation lumineuse.

La largeur et l'épaisseur du guide d'onde 13 peuvent varier entre quelques centaines de nanomètres et quelques micromètres. De façon générale, les dimensions du guide d'onde sont choisies en fonction de la gamme de longueur d'ondes de la source laser.

Ce guide d'onde peut être obtenu selon différents procédés connus de l'état de la technique, dans une large gamme de longueurs d'ondes.

On peut ainsi citer l'article « Silicon nitride films on silicon for optical waveguides » de W. Stutius et W. Streifer (Applied optics / vol.16, n° 12/ December 1977) ou encore l'article « Photosensor and optical waveguide coupling in silicon technology » de M. Moreno et al (Sensors and Actuators - A62 (1997)).

Par ailleurs, l'extrémité 130 du guide d'onde 13, opposée à la source laser 12, peut comporter un dispositif photonique pour réaliser une fonction de focalisation.

Ce dispositif photonique peut être obtenu par nanostructuration. Il permet par exemple d'augmenter la densité et/ou la sensibilité de la lumière émise par le guide d'onde.

On peut citer l'article « Efficient unidirectional nanoslit couplers for surface plasmons » de F. López-Tejeira et al (Nature physics / vol.3 / May 2007).

Sur la face 100 du substrat 10 est également prévu un photodétecteur 14 à proximité de la cavité 11 et donc de la section d'entrée 111.

Le photodétecteur 14 est décalé par rapport à l'axe optique ou non aligné avec cet axe optique.

Ce photodétecteur 14 peut notamment consister en un pyromètre ou un bolomètre. Il consiste avantageusement en une photodiode comportant une jonction pn.

Les photodiodes présentent l'avantage d'être plus sensibles et d'être d'une réalisation plus simple.

Lorsque le dispositif de détection de particules fonctionne avec des longueurs d'ondes situées dans le visible ou dans le proche infrarouge, la photodiode peut consister en une jonction pn réalisée en silicium. Pour des longueurs d'ondes situées au-delà de 1,1 µm, la photodiode pourra être réalisée par une jonction pn en semi-conducteur composite ou en germanium.

Il a été indiqué que l'extrémité 130 du guide d'onde et le photodétecteur sont situés à proximité de la cavité. Ceci signifie qu'ils sont suffisamment proches de la cavité pour remplir leur fonction respective : émission d'un faisceau lumineux dans la cavité et détection de la lumière diffusée.

Par ailleurs, le photodétecteur ne doit pas être situé sur le même axe que le faisceau lumineux émis par le guide d'onde pour remplir sa fonction de détection.

Le dispositif 1 peut comporter une photodiode 15, sensiblement en vis-à-vis de l'extrémité 130 du guide d'onde, la photodiode 15 et l'extrémité 130 étant séparées par la cavité 11. Cette photodiode a pour fonction de mesurer la puissance du laser.

Ainsi, le détecteur de particules selon l'invention comporte trois unités principales : les moyens optiques, un espace d'interaction entre un flux de particules et la radiation lumineuse ainsi que des moyens photodétecteurs.

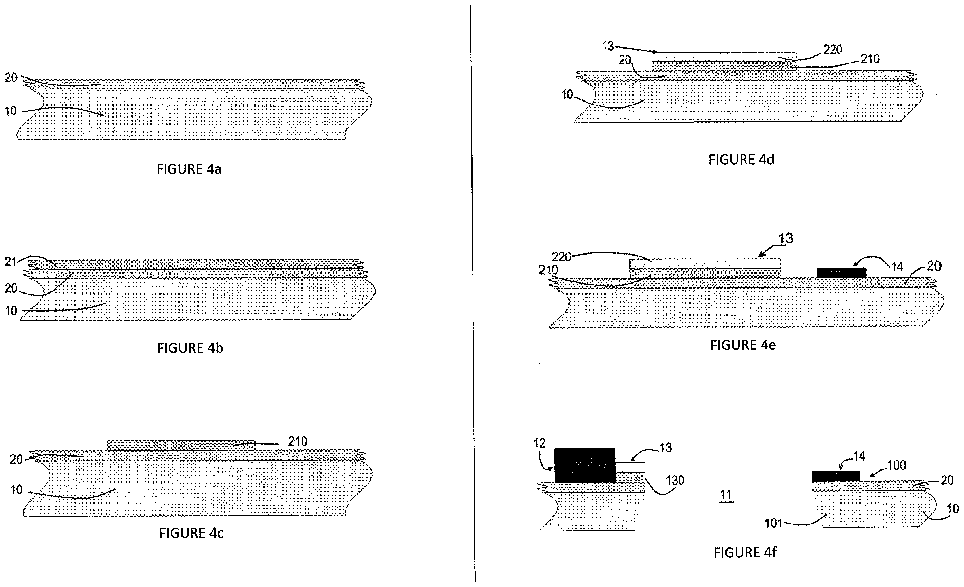

De préférence, les moyens optiques et les moyens photodétecteurs sont situés sur la même face du substrat. Ceci facilite la fabrication du détecteur, comme cela apparait aux figures 4a à 4f.

Son fonctionnement est sensiblement similaire à celui d'un compteur optique de particules conventionnel.

Cependant, le premier avantage que présente ce détecteur de particules, par rapport aux compteurs optiques de particules classiques, provient du fait que l'ensemble de ses composants est réalisé sur un même substrat en utilisant des procédés de fabrication issus des technologies CMOS et/ou MEMS.

Or, ces procédés assurent classiquement un degré de contrôle dimensionnel, une rigidité structurale et une robustesse qui sont bien supérieures à celles obtenues avec un simple montage mécanique, tel que celui des compteurs optiques de particules classiques. Ainsi, sont résolus les problèmes d'alignement ou de réglage, qui se posent dans les détecteurs formés de composants discrets.

Dans le même ordre d'idée, le détecteur de particules selon l'invention peut être miniaturisé, tous ses moyens constitutifs étant réalisés sur la même puce.

En particulier, si le substrat est réalisé en un matériau semi-conducteur, tous les moyens nécessaires au fonctionnement du détecteur de particules, notamment les pré-amplificateurs associés aux photodétecteurs, peuvent être réalisés sur le substrat. Il n'est donc pas nécessaire de réaliser une carte électronique indépendante du substrat.

Le détecteur obtenu est donc complètement portatif et autonome, ce qui ne peut pas être facilement obtenu lorsque le détecteur est obtenu par assemblage de composants discrets.

Un autre avantage du détecteur de particules selon l'invention provient du fait que ses différents composants sont réalisés simultanément sur le même substrat.

On peut donc envisager de réaliser des détecteurs de particules selon l'invention qui comportent une pluralité de sources laser et/ou de moyens photodétecteurs, sans que leur coût de fabrication soit modifié.

Grâce à cette multiplication de moyens optiques et photodétecteurs, on peut considérablement réduire le risque de sous-estimation de la concentration de particules, risque qui est élevé avec les compteurs optiques de particules classiques.

Par ailleurs, cette multiplication de moyens optiques et de moyens photodétecteurs rend possible une estimation précise de la taille des particules par des méthodes de scatterométrie.

Ceci ressort notamment de l'article « Robust sub -50-nm CD control by a fast-goniometric scatterometry technique » de J. Hazart et al (Proc. SPIE, Vol.6518, 65183A (2007)). Il montre que le signal détecté par une pluralité de photodétecteurs a été utilisé pour déterminer la forme et les dimensions des objets diffusant de la lumière.

Ainsi, les procédés de fabrication utilisés permettent de mieux garantir l'alignement des différents composants du détecteur de particules que pour un simple assemblage de composants discrets.

De même, le fait que l'ensemble des composants soit solidaire du substrat rend ceux-ci moins sujets aux vibrations et aux fluctuations de température. En particulier, la température du détecteur peut être stabilisée par un dispositif Peltier. Ceci rend le détecteur de particules plus stable et les mesures reproductibles.

Un autre avantage du détecteur de particules selon l'invention réside dans le fait qu'il permet de détecter des particules dont la taille est sensiblement inférieure au micron.

En effet, grâce au procédé de réalisation employé, la gamme de longueurs d'ondes disponible au niveau de la source laser est comprise entre environ 1,5 µm jusqu'à environ 450 nm.

De ce fait, le détecteur peut permettre d'analyser des particules dont la taille est de l'ordre de 0,5 µm ou supérieure à 0,5 µm.

Le détecteur de particules selon l'invention répond donc aux normes actuelles et pourra donc être utilisé avec de futures normes plus exigeantes.

Par ailleurs, un détecteur de particules selon l'invention peut inclure plusieurs sondes laser et donc générer plusieurs faisceaux lumineux.

De façon générale, une particule circulant dans la cavité 11, une partie de la lumière émise par le guide d'onde 13 est diffractée, typiquement dans toutes les directions.

Le photodétecteur 14 peut alors mesurer un flux lumineux qui sera fonction de l'intensité du faisceau lumineux émis par le guide d'onde, de la longueur d'onde de la radiation, ainsi que de la taille et de la nature de la particule.

Les photodétecteurs sont avantageusement placés à proximité de la cavité 11, ce qui permet de collecter davantage de photons et contribue à la précision de la mesure.

Un procédé de réalisation d'un détecteur de particules, comme celui illustré à la figure 1, va maintenant être décrit en référence aux figures 4a à 4f.

Dans une première étape (a) illustrée à la figure 4a, est déposée sur une face d'un substrat 10, une première couche 20 d'un matériau d'un premier indice optique n₁.

Ce substrat 10 peut être avantageusement du silicium. En pratique, tous les substrats compatibles avec les technologies classiques de micro- et nano-fabrications peuvent être utilisés.

Lorsque le détecteur doit intégrer une source laser générant une radiation lumineuse dans le domaine des infrarouges, le substrat peut être la première couche de Si d'un empilement SOI (Silicium on Insulator ou Silicium sur isolant).

Le matériau utilisé pour réaliser la première couche 20 est typiquement du SiO₂.

Son épaisseur est de l'ordre de la longueur d'onde utilisée pour le détecteur. Elle est donc par exemple comprise entre 0,1 et 1,5 µm.

Dans une deuxième étape (b) illustrée à la figure 4b, est déposée sur la première couche 20, une deuxième couche 21 d'un matériau présentant un deuxième indice optique n₂. Le deuxième indice optique n₂ est supérieur au premier indice n₁.

Le matériau utilisé pour réaliser la deuxième couche 21 est typiquement Si₃N₄, Al₂O₃ ou HfO₂, lorsque le détecteur optique est destiné à intégrer une source laser générant une radiation lumineuse dans le domaine du visible. Ce matériau peut être Si, pour une source laser générant une radiation lumineuse dans le domaine des infrarouges.

L'épaisseur de la deuxième couche 21 est également de l'ordre de la longueur d'onde utilisée pour le détecteur. Elle est donc par exemple comprise entre 0,1 et 1,5 µm.

Les figures 4c et 4d illustrent l'étape (c) de réalisation d'un guide d'onde.

Tout d'abord, la figure 4c illustre une étape de structuration de la deuxième couche 21, par photolithographie et gravure sélective.

Cette étape de structuration permet d'obtenir un motif 210 correspondant au guide d'onde.

Dans cette même étape, peuvent également être réalisés un démultiplexeur du guide d'onde, destiné à générer un nombre n de faisceaux lumineux, chacun d'eux ayant une intensité I/n, où I est l'intensité lumineuse injectée par la source laser dans le guide d'onde ou encore un coupleur, destiné à assurer le couplage entre le guide d'onde et la source laser qui sera ensuite réalisée sur le substrat.

La figure 4d illustre une étape de structuration d'une troisième couche de matériau, préalablement déposée sur le motif 210.

Cette troisième couche est réalisée en un matériau d'un troisième indice optique n₃, n₃ étant inférieur à n₂.

Le matériau utilisé pour réaliser la troisième couche est typiquement du SiO₂.

Le motif obtenu porte la référence 220.

La structure obtenue permet de définir le guide d'onde 13.

La figure 4e illustre l'étape (d) de réalisation d'un photodétecteur 14. Bien entendu, dans cette étape, une pluralité de photodétecteurs pourrait être réalisée.

Lorsque le photodétecteur est une photodiode, son mode d'obtention dépend du mode de fonctionnement du détecteur.

Lorsque celui-ci comprend une source laser générant une radiation lumineuse dans le domaine du visible, la photodiode est réalisée directement sur le substrat 10 lorsqu'il est réalisé en Si. Dans le cas où le substrat est du saphir par exemple, une vignette en semi-conducteur est collée sur le substrat 10.

Lorsque la source laser émet une radiation lumineuse dans le domaine des infrarouges, le photodétecteur est obtenu par croissance d'une couche de Ge épitaxiale, directement à partir de la couche 21 de l'empilement SOI par exemple ou par collage moléculaire d'une vignette de semi-conducteur composite, par exemple GaAs, sur la couche 20 de SiO2 (figure 4e).

On peut à cet égard se référer à l'article « Ultrahigh speed germanium-on-silicon-on-insulator photodetectors for 1.31 an 1.55 µm opération » de M. Rouvière et al (Applied physics letters 87, 231109 - 2005).

Les étapes suivantes (e) et (f) consistent à réaliser une source laser 12 sur la première couche 20, puis à réaliser les interconnexions électriques entre les différents éléments réalisés sur le substrat 10.

La figure 4f illustre la dernière étape (g) du procédé qui consiste à réaliser la cavité 11, à l'intérieur du substrat 10.

La cavité 11 peut par exemple être réalisée par gravure anisotrope du silicium constituant le substrat 10, depuis la face 101 du substrat jusqu'à la face 100. Ceci permet d'obtenir une forme en entonnoir pour la cavité 11.

La cavité peut également être obtenue par gravure réactive profonde du substrat 10, qu'il soit constitué en Si ou d'un autre matériau.

Le détecteur de particules ainsi obtenu correspond à celui qui est illustré à la figure 1.

Le procédé montre qu'il est plus facile de réaliser toutes les opérations sur une même face 100 du substrat 10, sans que cela soit limitatif.

On se réfère maintenant aux figures 2 et 3 qui illustrent deux autres exemples de réalisation d'un détecteur de particules selon l'invention.

Le détecteur 3 illustré à la figure 2 comporte, sur une face 300 d'un substrat 30, au moins une source laser 32 et un guide d'onde 33 agencé de manière à émettre une pluralité de faisceaux lumineux à proximité de la cavité 11.

Dans l'exemple illustré à la figure 2, le guide d'onde 33 permet de générer sept faisceaux lumineux 36 qui sont tous sur le même plan qui coïncide avec celui du substrat.

Un tel guide d'onde permet d'émettre une pluralité de faisceaux lumineux indépendants, à partir d'une seule source laser, ces faisceaux lumineux étant sensiblement équivalents en termes de qualité et d'intensité. Ceci peut notamment être obtenu grâce à un démultiplexeur. Tous ces faisceaux sont émis depuis le même bord de la cavité.

Le détecteur 3 comporte également une pluralité de photodétecteurs 34 qui sont placés à proximité de la cavité 31, en étant décalés par rapport à l'axe des faisceaux lumineux émis par le guide d'onde 33. Tous les photodétecteurs sont positionnés le long du même bord de la cavité.

Il comporte également, dans cet exemple de réalisation, une pluralité de photodiodes 35 sensiblement en vis-à-vis des extrémités du guide d'onde et séparées de celles-ci par la cavité 31. Toutes ces photodiodes sont situées sur un même bord de la cavité, opposé à celui où débouchent les extrémités du guide d'onde.

Dans l'exemple illustré à la figure 2, le nombre de faisceaux émis par le guide d'onde est identique à celui de photodétecteurs (sept). Cependant, ceci n'est pas indispensable. Si le nombre de photodétecteurs est plus important, les informations recueillies sur les particules seront plus importantes. Si le nombre de faisceaux est plus important, le nombre d'erreurs sera réduit.

Un détecteur de ce type permet de réaliser un maillage ou mappage de l'espace dans lequel les particules et les faisceaux lumineux interagissent, grâce à l'utilisation de plusieurs faisceaux et plusieurs détecteurs en parallèle.

Ainsi, chaque photodétecteur capte une fraction de la lumière qui est fonction du nombre de particules dans le volume de détection, de leur taille, de leur position et de la position du photodétecteur. L'analyse des données issues des photodétecteurs, selon la technique de scatterométrie, permet de reconstruire la forme et la position des particules présentes dans le volume.

Ce maillage permet d'augmenter la capacité de discrimination du détecteur et également de pouvoir détecter les particules dans une gamme de taille assez large.

On peut noter que le dispositif 3 peut également comporter une pluralité de sources laser, pouvant générer des radiations lumineuses à des longueurs d'onde différentes.

Le détecteur, comporte alors une pluralité de guides d'onde, chacun d'entre eux étant relié à chacune des sources laser, associées chacune à un démultiplexeur. Ce mode de réalisation permet d'obtenir d'avantage d'informations pour une taille donnée de particules.

La figure 3 illustre un autre exemple de détecteur selon l'invention.

Ce dernier comporte une pluralité de cavités 41 ménagées dans un substrat 40.

Un guide d'onde 43 permet de relier une source laser 42 à chacune des cavités 41 et donc d'émettre un faisceau lumineux dans chacune de ces cavités. Le guide d'onde et la source laser sont situés sur une même face 400 du substrat.

Là encore, des procédés connus permettent de réaliser le guide d'onde de telle sorte que les faisceaux lumineux émis dans chacune des cavités 41 présentent une cavité et une intensité sensiblement identiques.

Pour les guides d'onde illustrés aux figures 2 et 3, on peut notamment faire référence à l'article « Silicon-on insulator (SOI) phased-array wavelength multi/demultiplexer with extremely low-polarization sensitivity » de P.D. Trinh et al (IEEE Photonics Technology Letters, vol.9 n°7, July 1997).

A chacune des cavités 41, est associé un photodétecteur 44 qui est décalé par rapport à l'axe du faisceau lumineux émis par le guide d'onde et une photodiode 45 située en vis-à-vis de l'extrémité du guide d'onde et en étant séparée par la cavité 41.

Le détecteur 4 présente l'avantage de comporter une pluralité d'espaces d'interaction entre un flux de particules à détecter et un faisceau lumineux.

Il peut donc détecter une densité importante de particules, grâce à un partage préalable du flux d'air entre les différentes cavités 41, ce qui permet de générer plusieurs volumes d'interaction.

Par ailleurs, le détecteur 4 permet de réduire les risques se sous-estimation du nombre de particules.

En effet, la probabilité que deux particules soient présentes dans la même cavité est proportionnelle à la surface correspondante libérée dans le substrat. Elle est donc beaucoup plus faible dans un détecteur comportant une pluralité de cavités de dimensions réduites que dans un seul détecteur de section comparable à la somme des sections des cavités plus petites.

Dans l'exemple illustré, les cavités 41 sont de section carrée et la longueur d'un côté de ce carré sera typiquement comprise entre 10 et 100 microns, alors que la dimension des particules à détecter est comprise entre 1 et 10 microns.

Enfin, grâce à la mise en parallèle de plusieurs cavités de taille réduite, le détecteur 4 présente la même efficacité qu'un détecteur présentant une seule cavité de taille plus importante.

## Revendications

1. Détecteur de particules du type compteur optique, comprenant un substrat (10, 30, 40), dans lequel est formé au moins une cavité traversante (11, 31, 41), délimitée par une section d'entrée (110) et une section de sortie (111), sa section d'entrée étant destinée à être reliée à une source de flux d'air, ledit flux d'air comportant les particules à détecter, ledit substrat supportant :
- des moyens optiques comprenant au moins une source laser (12, 32, 42) et au moins un guide d'onde (13, 33, 43), relié à ladite au moins une source laser et dont l'extrémité est située à proximité de la section de sortie de ladite cavité et
- des moyens photodétecteurs (14, 34, 44) situés à proximité de la section de sortie de ladite cavité et décalés par rapport à l'axe optique desdits moyens optiques, pour détecter la lumière diffusée.

2. Détecteur selon la revendication 1, dans lequel les moyens optiques et les moyens photodétecteurs sont situés sur une même face (100) du substrat.

3. Détecteur selon la revendication 1 ou 2, dans lequel ladite au moins une cavité (11) présente une section variable qui diminue depuis la section d'entrée (110) jusqu'à la section de sortie (111).

4. Détecteur selon l'une des revendications 1 à 3, dans lequel les moyens optiques comprennent également au moins un dispositif photonique, à l'extrémité du guide d'onde opposée à la source laser.

5. Détecteur selon l'une des revendications 1 à 4, dans lequel les moyens photodétecteurs comprennent une pluralité de photodétecteurs (34) associés à une cavité traversante (31).

6. Détecteur selon l'une des revendications 1 à 4, dans lequel le substrat (40) comporte une pluralité de cavités traversantes (41).

7. Procédé de réalisation d'un détecteur de particules selon l'une des revendications 1 à 6, comprenant les étapes suivantes :
(a) le dépôt, sur un substrat (10), d'une première couche (20) d'un matériau d'un premier indice optique (n₁),
(b) le dépôt sur cette première couche, d'une deuxième couche (21) d'un matériau d'un deuxième indice optique n₂, n₂ étant supérieur à n₁,
(c) la réalisation d'au moins un guide d'onde (13) par structuration de la deuxième couche (21), puis par dépôt et structuration d'une troisième couche (22) d'un matériau d'un troisième indice optique n₃, n₃ étant inférieur à n₂,
(d) la réalisation d'au moins un photodétecteur (14),
(e) la réalisation d'au moins une source laser (12) à une extrémité dudit au moins un guide d'onde (13),
(f) la réalisation des interconnexions électriques entre les différents éléments réalisés sur le substrat et
(g) la réalisation par gravure dans le substrat (10) d'au moins une cavité traversante (11) débouchant à proximité de l'extrémité (130) dudit au moins un guide d'onde opposée à la source laser et à proximité dudit au moins un photodétecteur (14), le photodétecteur étant décalé par rapport à l'axe optique.

8. Procédé selon la revendication 7, dans lequel les étapes (a) à (f) sont réalisées sur une même face (100) du substrat (10).

9. Procédé selon la revendication 7 ou 8 dans lequel le substrat est en matériau semi-conducteur, notamment du silicium.

10. Procédé selon l'une des revendications 7 à 9 dans lequel, au cours de l'étape (d), le photodétecteur réalisé est une photodiode.

11. Procédé selon l'une des revendications 7 à 10 comportant, après l'étape (c), une étape complémentaire consistant à nanostructurer l'extrémité (130) du guide d'onde, opposée à la source laser, pour réaliser une fonction de focalisation.

## Patentansprüche

1. Partikeldetektor vom Typ optischer Zähler, umfassend ein Substrat (10, 30, 40), in dem mindestens ein durchgehender Hohlraum (11, 31, 41) gebildet ist, der durch einen Eingangsabschnitt (110) und einen Ausgangsabschnitt (111) begrenzt wird, wobei sein Eingangsabschnitt dazu bestimmt ist, mit einer Luftstromquelle verbunden zu werden, wobei der Luftstrom die zu detektierenden Partikeln einschließt,
wobei das Substrat Folgendes trägt:
- optische Mittel, die mindestens eine Laserquelle (12, 32, 42) und mindestens einen Wellenleiter (13, 33, 43) umfassen, der mit der mindestens einen Laserquelle verbunden ist und dessen Ende sich in der Nähe des Ausgangsabschnitts des Hohlraums befindet, und
- Photodetektormittel (14, 34, 44), die sich in der Nähe des Ausgangsabschnitts des Hohlraums befinden und in Bezug auf die optische Achse der optischen Mittel versetzt sind, um das gestreute Licht zu detektieren.

2. Detektor nach Anspruch 1, wobei sich die optischen Mittel und die Photodetektormittel auf einer gleichen Seite (100) des Substrats befinden.

3. Detektor nach Anspruch 1 oder 2, wobei der mindestens eine Hohlraum (11) einen variablen Abschnitt aufweist, der vom Eingangsabschnitt (110) bis zum Ausgangsabschnitt (111) abnimmt.

4. Detektor nach einem der Ansprüche 1 bis 3, wobei die optischen Mittel ebenfalls mindestens eine Photonenvorrichtung am Ende des Wellenleiters umfassen, das der Laserquelle gegenüberliegt.

5. Detektor nach einem der Ansprüche 1 bis 4, wobei die Photodetektormittel eine Vielzahl von Photodetektoren (34) umfassen, die mit einem durchgehenden Hohlraum (31) verknüpft sind.

6. Detektor nach einem der Ansprüche 1 bis 4, wobei das Substrat (40) eine Vielzahl von durchgehenden Hohlräumen (41) einschließt.

7. Herstellungsverfahren eines Partikeldetektors nach einem der Ansprüche 1 bis 6, umfassend die folgenden Schritte:
(a) die Ablagerung auf einem Substrat (10) einer ersten Schicht (20) aus einem Material eines ersten optischen Index (n₁),
(b) die Ablagerung auf dieser ersten Schicht einer zweiten Schicht (21) aus einem Material eines zweiten optischen Index n₂, wobei n₂ größer als n₁ ist,
(c) die Herstellung von mindestens einem Wellenleiter (13) durch Strukturierung der zweiten Schicht (21), dann durch Ablagerung und Strukturierung einer dritten Schicht (22) aus einem Material eines dritten optischen Index n₃, wobei n₃ kleiner als n₂ ist,
(d) die Herstellung von mindestens einem Photodetektor (14),
(e) die Herstellung von mindestens einer Laserquelle (12) an einem Ende des mindestens einen Wellenleiters (13),
(f) die Herstellung der elektrischen Verbindungen zwischen den unterschiedlichen auf dem Substrat hergestellten Elementen und
(g) die Herstellung durch Gravieren in das Substrat (10) von mindestens einem durchgehenden Hohlraum (11), der in der Nähe des Endes (130) des mindestens einen Wellenleiters, das der Laserquelle gegenüberliegt, und in der Nähe des mindestens einen Photodetektors (14) mündet, wobei der Photodetektor in Bezug auf die optische Achse versetzt ist.

8. Verfahren nach Anspruch 7, wobei die Schritte (a) bis (f) auf einer gleichen Seite (100) des Substrats (10) durchgeführt werden.

9. Verfahren nach Anspruch 7 oder 8, wobei das Substrat aus einem Halbleitermaterial, insbesondere Silizium, zusammengesetzt ist.

10. Verfahren nach einem der Ansprüche 7 bis 9, wobei der im Laufe des Schritts (d) hergestellte Photodetektor eine Photodiode ist.

11. Verfahren nach einem der Ansprüche 7 bis 10, einschließend, nach dem Schritt (c), einen zusätzlichen Schritt, der darin besteht, das Ende (130) des Wellenleiters, das der Laserquelle gegenüberliegt, zu nanostrukturieren, um eine Fokussierungsfunktion durchzuführen.

## Claims

1. Particle detector of the optical counter type, comprising a substrate (10, 30, 40), in which is formed at least one through-cavity (11, 31, 41), delimited by an input section (110) and an output section (111), the input section thereof being intended to be connected to an air flow source, said air flow comprising the particles to be detected, said substrate supporting:
- optical means comprising at least one laser source (12, 32, 42) and at least one waveguide (13, 33, 43), connected to said at least one laser source and of which the end is situated in the proximity of the output section of said cavity and
- photodetector means (14, 34, 44) situated in the vicinity of the output section of said cavity and offset with respect to the optical axis of said optical means, to detect the diffused light.

2. Detector according to claim 1, wherein the optical means and the photodetector means are situated on the same face (100) of the substrate.

3. Detector according to claim 1 or 2, wherein said at least one cavity (11) has a variable section which decreases from the input section (110) to the output section (111).

4. Detector according to one of claims 1 to 3, wherein the optical means also comprise at least one photonic device, at the end of the waveguide opposite the laser source.

5. Detector according to one of claims 1 to 4, wherein the photodetector means comprise a plurality of photodetectors (34) associated with a through-cavity (31).

6. Detector according to one of claims 1 to 4, wherein the substrate (40) comprises a plurality of through-cavities (41).

7. Method for producing a particle detector according to one of claims 1 to 6, comprising the following steps:
(a) the depositing, on a substrate (10), of a first layer (20) of a material of a first optical index (n₁),
(b) the depositing on this layer, of a second layer (21) of a material of a second optical index n₂, n₂ being greater than n₁,
(c) the production of at least one waveguide (13) by structuring the second layer (21), then by depositing and structuring a third layer (22) of a material of a third optical index n₃, n₃ being less than n₂,
(d) the production of at least one photodetector (14),
(e) the production of at least one laser source (12) at an end of said at least one waveguide (13),
(f) the production of electrical interconnections between the different elements produced on the substrate and
(g) the production by engraving in the substrate (10) at least one through-cavity (11) leading to the vicinity of the end (130) of said at least one waveguide opposite the laser source and to the vicinity of said at least one photodetector (14), the photodetector being offset with respect to the optical axis.

8. Method according to claim 7, wherein steps (a) to (f) are carried out on the same face (100) of the substrate (10).

9. Method according to claim 7 or 8, wherein the substrate is made of a semi-conductive material, in particular silicon.

10. Method according to one of claims 7 to 9, wherein, during step (d), the photodetector produced is a photodiode.

11. Method according to one of claims 7 to 10 comprising, after step (c), a complementary step consisting of nanostructuring the end (130) of the waveguide, opposite the laser source, to achieve a focusing function.
